# EUROPEAN PATENT APPLICATION

(11) **EP 4 579 602 A1**
(43) Date of publication of application: **02.07.2025**
(21) Application number: 23857371.1
(22) Date of filing: 23.08.2023
(51) Int. Cl.: G06T 17/00, G06T 7/00, G06T 7/70, G06V 10/77, G06V 20/64

(54) **INFORMATION PROCESSING DEVICE, INFORMATION PROCESSING SYSTEM, INFORMATION PROCESSING METHOD, AND COMPUTER PROGRAM**

(30) Priority: 23.08.2022 JP 2022132598
(71) Applicant: DAIKIN INDUSTRIES, LTD., Osaka-shi, Osaka 530-0001 (JP)
(72) Inventor: KANAYAMA, Hiroaki, Osaka-shi, Osaka 530-0001 (JP); SATO, Daisuke, Osaka-shi, Osaka 530-0001 (JP); SABU, Shunsuke, Osaka-shi, Osaka 530-0001 (JP)
(74) Representative: Goddar, Heinz J.
(86) International application number: PCT/JP2023/030258
(87) International publication number: WO 2024/043263

(57) **Abstract**

An information processing apparatus includes: an acquisition unit that acquires target space data acquired as measurement is performed inside a target space from a plurality of positions; and a processing unit that processes the acquired data. The processing unit recognizes an attribute and a position of an object affecting an environment in the target space, and outputs the attribute and the position of the object in association with the target space data.

## Description

### Technical Field

The present disclosure relates to an information processing apparatus, an information processing system, an information processing method, and a computer program.

### Background Art

PTL 1 discloses a technique of creating model data indicating a shape of an object based on three-dimensional point group data and of performing fluid flow calculation using the created model data.

PTL 2 discloses a technique of creating a database in which three-dimensional point group data and images are combined with each other and of performing matching between the database and an image in which a target object is imaged to identify a position of the target object.

### Citation List

### Patent Literature

PTL 1: Japanese Patent No. 6286902
PTL 2: Japanese Patent No. 6610640

### Summary of Invention

### Technical Problem

When a model for fluid flow calculation for performing fluid flow analysis is to be prepared, it has taken many time to measure a size of and to model a shape inside a room or a fixture and to set conditions for those including a heat source, for example. Even when a conventional technique is used, it has taken many time to set various conditions.

An object of the present disclosure is, for example, to provide an information processing apparatus capable of outputting an attribute and a position of an object included in a target space in an associated manner based on target space data acquired as measurement is performed inside the target space from a plurality of positions.

### Solution to Problem

An information processing apparatus according to a first aspect of the present disclosure includes: an acquisition unit that acquires target space data acquired as measurement is performed inside a target space from a plurality of positions; and a processing unit that processes the acquired data, the processing unit recognizing, from the acquired target space data, an attribute and a position of an object in the target space, the object affecting an environment in the target space, and outputting the attribute and the position of the object in the target space in association with the target space data.

An information processing apparatus according to a second aspect of the present disclosure is the information processing apparatus according to the first aspect, in which, based on the target space data acquired by the acquisition unit and the attribute and the position of the object in the target space, an augmented reality image of the target space in which the attribute and the position of the object in the target space, the object affecting the environment in the target space, are reflected is created.

An information processing apparatus according to a third aspect of the present disclosure is the information processing apparatus according to the first aspect or the second aspect, in which, based on the target space data acquired by the acquisition unit and the attribute and the position of the object in the target space, a three-dimensional space model of the target space in which the attribute and the position of the object in the target space, the object affecting the environment in the target space, are reflected is created.

An information processing apparatus according to a 1-2th aspect of the present disclosure includes: an acquisition unit that acquires target space data acquired as measurement is performed inside a target space from a plurality of positions; and a processing unit, the processing unit recognizing, based on the target space data acquired by the acquisition unit, an attribute and a position of an object affecting an environment in the target space, and outputting, based on the target space data acquired by the acquisition unit and the attribute and the position of the object, the attribute and the position of the object with respect to the environment in the target space in an associated manner.

An information processing apparatus according to a 2-2th aspect of the present disclosure is the information processing apparatus according to the 1-2th aspect, in which, based on the target space data acquired by the acquisition unit and the attribute and the position of the object, a three-dimensional space model of the target space in which the attribute and the position of the object with respect to the environment in the target space are reflected is created.

An information processing apparatus according to a fourth aspect of the present disclosure is the information processing apparatus according to any one of the first to third, 1-2th, and 2-2th aspects, in which the three-dimensional space model is a model for predicting the environment in the target space.

An information processing apparatus according to a fifth aspect of the present disclosure is the information processing apparatus according to any one of the first to fourth, 1-2th, and 2-2th aspects, in which the object in the target space includes at least one of an object affecting an airflow in the target space, an object affecting a thermal environment in the target space, an object affecting air quality in the target space, and an object controlling the environment in the target space.

An information processing apparatus according to another aspect of the present disclosure is the information processing apparatus according to any one of the first to fifth, 1-2th, and 2-2th aspects, in which a type, a capability, a position, or control of air conditioning is changed to perform trial calculation of an improvement effect in the target space.

An information processing apparatus according to a sixth aspect of the present disclosure is the information processing apparatus according to any one of the first to fifth, 1-2th, and 2-2th aspects, in which the object in the target space includes at least one of a fixture, a fitting, a person, an industrial machine, a plant, an air conditioner, and a ventilation device.

An information processing apparatus according to a seventh aspect of the present disclosure is the information processing apparatus according to any one of the first to sixth, 1-2th, and 2-2th aspects, in which the object in the target space includes an air conditioner or a ventilation device, and the processing unit recognizes an air control port of the air conditioner or the ventilation device, and discriminates whether the air control port is a suction port or a blow-out port.

An information processing apparatus according to an eighth aspect of the present disclosure is the information processing apparatus according to any one of the first to seventh, 1-2th, and 2-2th aspects, in which the processing unit acquires duct system data representing a duct system related to the suction port or the blow-out port in the target space, and discriminates the suction port or the blow-out port in the target space based on the acquired duct system data.

An information processing apparatus according to a ninth aspect of the present disclosure is the information processing apparatus according to any one of the first to eighth, 1-2th, and 2-2th aspects, in which the duct system data includes orientation information and outer shape information indicating, respectively, an orientation and an outer shape of the duct system, and the processing unit acquires orientation information related to an orientation in the target space, and, based on the acquired orientation information, information representing an outer shape in the target space based on the target space data, and the duct system data, aligns the target space represented by the target space data and the duct system represented by the duct system data in position with each other.

An information processing apparatus according to a tenth aspect of the present disclosure is the information processing apparatus according to any one of the first to ninth, 1-2th, and 2-2th aspects, in which the processing unit acquires thermography data of the target space, and discriminates the suction port or the blow-out port based on the acquired thermography data.

An information processing apparatus according to an eleventh aspect of the present disclosure is the information processing apparatus according to any one of the first to tenth, 1-2th, and 2-2th aspects, in which the target space data includes image data of the target space, and the processing unit calculates a feature amount related to the suction port or the blow-out port based on the acquired image data, and discriminates the suction port or the blow-out port based on the calculated feature amount.

An information processing apparatus according to a twelfth aspect of the present disclosure is the information processing apparatus according to any one of the first to eleventh, 1-2th, and 2-2th aspects, in which the attribute of the object in the target space includes at least one of a dimension and a shape of the object and sensible heat, latent heat, an air quantity, a direction of wind, and a wind speed in the target space.

An information processing apparatus according to a thirteenth aspect of the present disclosure is the information processing apparatus according to any one of the first to twelfth, 1-2th, and 2-2th aspects, in which the processing unit creates the three-dimensional space model including thermal boundary conditions in accordance with the attribute of the object in the target space.

An information processing apparatus according to a fourteenth aspect of the present disclosure is the information processing apparatus according to any one of the first to thirteenth, 1-2th, and 2-2th aspects, in which the processing unit acquires piping system data representing a piping system of an air conditioner in the target space, and creates the three-dimensional space model including thermal boundary conditions for the air conditioner based on the acquired piping system data.

An information processing apparatus according to a fifteenth aspect of the present disclosure is the information processing apparatus according to any one of the first to fourteenth, 1-2th, and 2-2th aspects, in which the piping system data includes orientation information and outer shape information indicating, respectively, an orientation and an outer shape of the piping system, and the processing unit acquires orientation information related to an orientation in the target space, and aligns, based on the acquired orientation information, information representing an outer shape in the target space based on the target space data, and the piping system data, the target space represented by the target space data and the piping system represented by the piping system data in position with each other.

An information processing apparatus according to a sixteenth aspect of the present disclosure is the information processing apparatus according to any one of the first to fifteenth, 1-2th, and 2-2th aspects, in which the processing unit acquires thermography data of the target space, and creates, based on the acquired thermography data, the three-dimensional space model including a temperature of the object as a thermal boundary condition.

An information processing apparatus according to a seventeenth aspect of the present disclosure is the information processing apparatus according to any one of the first to sixteenth, 1-2th, and 2-2th aspects, in which the processing unit acquires thermography data of the target space, outside air temperature data of the target space, solar radiation amount data, and thickness data of a fitting, and creates the three-dimensional space model including a heat transmission coefficient of the fitting as a thermal boundary condition based on each piece of the acquired data.

An information processing apparatus according to an eighteenth aspect of the present disclosure is the information processing apparatus according to any one of the first to seventeenth, 1-2th, and 2-2th aspects, in which the processing unit accepts editing of the attribute and the position of the object in the target space to change the three-dimensional space model.

An information processing apparatus according to a nineteenth aspect of the present disclosure is the information processing apparatus according to any one of the first to eighteenth, 1-2th, and 2-2th aspects, in which the processing unit accepts addition of an object in the target space to change the three-dimensional space model.

An information processing apparatus according to a twentieth aspect of the present disclosure is the information processing apparatus according to any one of the first to nineteenth aspects, 1-2th, and 2-2th aspects, in which the acquisition unit acquires the target space data acquired when a measuring device that measures a physical quantity related to a shape inside the target space is moved or rotated.

An information processing apparatus according to a twenty first aspect of the present disclosure is the information processing apparatus according to any one of the first to twentieth, 1-2th, and 2-2th aspects, in which the processing unit uses self-position estimation processing or visual line direction estimation processing to identify the target space and the position of the object in the target space.

An information processing apparatus according to a twenty second aspect of the present disclosure is the information processing apparatus according to any one of the first to twenty first, 1-2th, and 2-2th aspects, in which the acquisition unit acquires orientation information related to an orientation in the target space, and the processing unit creates the three-dimensional space model including the orientation information acquired by the acquisition unit or information based on the orientation information.

An information processing apparatus according to a twenty third aspect of the present disclosure is the information processing apparatus according to any one of the first to twenty second, 1-2th, and 2-2th aspects, in which the orientation information is information based on a latitude and a longitude of and a time in the target space and a position of a celestial body or information based on the latitude and the longitude of and the time in the target space and a direction of a shadow in a room and a length of the shadow.

An information processing apparatus according to a twenty fourth aspect of the present disclosure is the information processing apparatus according to any one of the first to twenty third, 1-2th, and 2-2th aspects, in which the target space data includes red, green, and blue (RGB) data and time data, and the processing unit identifies an orientation in the target space based on the RGB data and the time data, and creates the three-dimensional space model including orientation information indicating the identified orientation or information based on the orientation information.

An information processing apparatus according to a twenty fifth aspect of the present disclosure is the information processing apparatus according to any one of the first to twenty fourth, 1-2th, and 2-2th aspects, in which the target space data includes RGB data and time data, and the processing unit identifies a utilization scene of the target space based on the RGB data and the time data.

An information processing apparatus according to a twenty sixth aspect of the present disclosure is the information processing apparatus according to any one of the first to twenty fifth, 1-2th, and 2-2th aspects, in which the processing unit discriminates whether or not the target space data includes the object in the target space in an overlapping manner.

An information processing apparatus according to a twenty seventh aspect of the present disclosure is the information processing apparatus according to any one of the first to twenty sixth, 1-2th, and 2-2th aspects, in which the processing unit excludes, when the object included in the target space is recognized in an overlapping manner, the overlapping object.

An information processing apparatus according to a twenty eighth aspect of the present disclosure is the information processing apparatus according to any one of the first to twenty seventh, 1-2th, and 2-2th aspects, in which an attribute and a position of a confidential target object in the target space is recognized based on the target space data acquired by the acquisition unit, based on the target space data acquired by the acquisition unit, the attribute and the position of the object in the target space, and the attribute and the position of the confidential target object in the target space, the three-dimensional space model of the target space, in which the attributes and the positions of the object and the confidential target object with respect to the environment in the target space are reflected, is created, and the confidential target object is processed.

An information processing system according to a twenty ninth aspect of the present disclosure includes: the information processing apparatus according to any one of the first to twenty eighth, 1-2th, and 2-2th aspects; and a measuring device that measures a physical quantity related to a shape inside the target space, in which the information processing apparatus acquires the target space data from the measuring device.

An information processing system according to a thirtieth aspect of the present disclosure includes: an acquisition unit that acquires target space data acquired as measurement is performed inside a target space from a plurality of positions; and a processing unit that processes the acquired data, the processing unit recognizing an attribute and a position of an object in the target space, the object affecting an environment in the target space, and outputting the attribute and the position of the object in the target space in association with the target space data.

An information processing method according to a thirty first aspect of the present disclosure includes: acquiring target space data acquired as measurement is performed inside a target space from a plurality of positions; recognizing an attribute and a position of an object in the target space, the object affecting an environment in the target space; and outputting the attribute and the position of the object in the target space in association with the target space data.

A computer program according to a thirty second aspect of the present disclosure causes a computer to execute a process including: acquiring target space data acquired as measurement is performed inside a target space from a plurality of positions; recognizing an attribute and a position of an object in the target space, the object affecting an environment in the target space; and outputting the attribute and the position of the object in the target space in association with the target space data.

An information processing system according to a 30-2th aspect of the present disclosure includes: an acquisition unit that acquires target space data acquired as measurement is performed inside a target space from a plurality of positions; and a processing unit, the processing unit recognizing, based on the target space data acquired by the acquisition unit, an attribute and a position of an object affecting an environment in the target space, and outputting, based on the target space data acquired by the acquisition unit and the attribute and the position of the object, the attribute and the position of the object with respect to the environment in the target space in an associated manner.

An information processing method according to a 31-2th aspect of the present disclosure includes: acquiring target space data acquired as measurement is performed inside a target space from a plurality of positions; recognizing, based on the acquired target space data, an attribute and a position of an object affecting an environment in the target space, and outputting, based on the acquired target space data and the attribute and the position of the object, the attribute and the position of the object with respect to the environment in the target space in an associated manner.

A computer program according to a 32-2th aspect of the present disclosure causes a computer to execute a process including: acquiring target space data acquired as measurement is performed inside a target space from a plurality of positions; recognizing, based on the acquired target space data, an attribute and a position of an object affecting an environment in the target space, and outputting, based on the acquired target space data and the attribute and the position of the object, the attribute and the position of the object with respect to the environment in the target space in an associated manner.

### Brief Description of Drawings

[Fig. 1] Fig. 1 is a block diagram illustrating a configuration example of an information processing system according to a present embodiment.
[Fig. 2] Fig. 2 is a perspective view illustrating a configuration example and a usage example of a measuring device according to the present embodiment.
[Fig. 3] Fig. 3 is a conceptual diagram of a learning model according to the present embodiment.
[Fig. 4] Fig. 4 is a conceptual diagram of an object database (DB) according to the present embodiment.
[Fig. 5] Fig. 5 is a flowchart illustrating a processing procedure in an information processing apparatus system according to the present embodiment.
[Fig. 6] Fig. 6 is a flowchart illustrating a creation processing procedure for a three-dimensional space model.
[Fig. 7] Fig. 7 is a flowchart illustrating the creation processing procedure for a three-dimensional space model.
[Fig. 8] Fig. 8 is an explanatory diagram illustrating an example of a three-dimensional point group and a captured image.
[Fig. 9] Fig. 9 is an explanatory diagram illustrating an example of a three-dimensional space model.
[Fig. 10] Fig. 10 is a conceptual diagram illustrating confidentializing processing for a confidential target object.
[Fig. 11] Fig. 11 is a conceptual diagram illustrating exclusion processing for an overlapping object.
[Fig. 12] Fig. 12 is a flowchart illustrating an editing processing procedure for an object.
[Fig. 13A] Fig. 13A is a conceptual diagram illustrating a changing method for an object.
[Fig. 13B] Fig. 13B is a conceptual diagram illustrating the changing method for an object.
[Fig. 13C] Fig. 13C is a conceptual diagram illustrating the changing method for an object.
[Fig. 14A] Fig. 14A is a conceptual diagram illustrating an adding method for an object.
[Fig. 14B] Fig. 14B is a conceptual diagram illustrating the adding method for an object.
[Fig. 14C] Fig. 14C is a conceptual diagram illustrating the adding method for an object.
[Fig. 15A] Fig. 15A is a conceptual diagram illustrating an editing method for a plane forming a target space.
[Fig. 15B] Fig. 15B is a conceptual diagram illustrating the editing method for a plane forming a target space.
[Fig. 15C] Fig. 15C is a conceptual diagram illustrating the editing method for a plane forming a target space.

### Description of Embodiments

An air-conditioning related apparatus and an air-conditioning system according to a present embodiment of the present disclosure will now be described herein with reference to the accompanying drawings. An outline of the present embodiment is as follows.

When a property of a customer is visited and business activities related to air conditioning are performed, performing airflow analysis under conditions for the actual property makes it possible to clarify problems in an air environment, such as temperature unevenness and stagnation that are considered to have actually occurred in the property of the customer, and to propose an apparatus. However, when a model for fluid flow calculation for actually performing airflow analysis is to be created, it takes many time to measure a size of and to model a shape inside a room or a fixture and to set conditions for those including a heat source, for example.

As a means for solving the problems, a method of automatically creating a model for fluid flow calculation is proposed. As a system example, a hand-held depth camera, a camera, a thermography, or a module integrated into a smartphone is used to capture images while walking in a space, and depth images and other images of those inside the space are stored in the smartphone. Data stored in the smartphone is transferred to an information processing apparatus 1, and software for three-dimensional reconstruction is used to create three-dimensional point group data. A floor, walls, and a ceiling are detected from the three-dimensional point group data, and a model for fluid flow calculation, which is a space model of a surface, is created. Note herein that a type (air conditioner or fixture, for example) and a position of an object are identified by performing image recognition based on learning performed in advance through machine learning on the captured images, and are reflected in the three-dimensional space model. A cleaning robot or a drone, for example, may be used to capture images, instead of urging a person holding a camera to capture images.

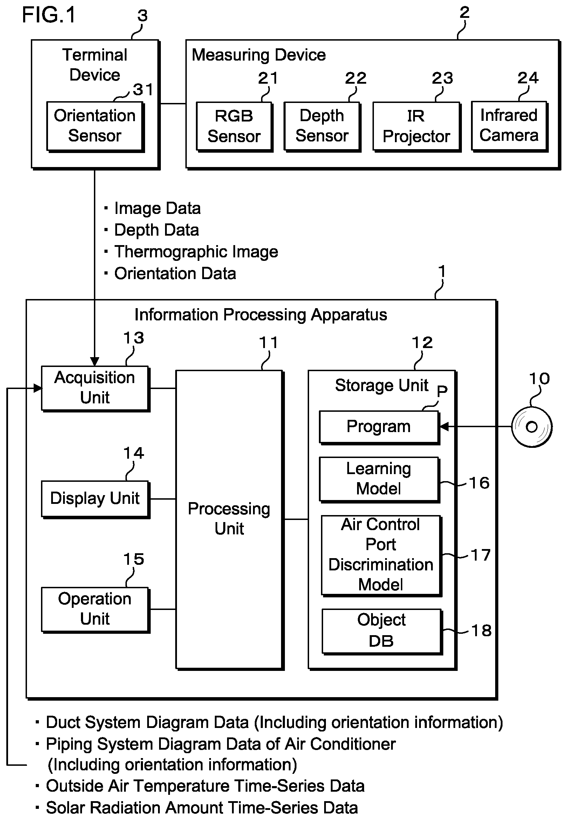

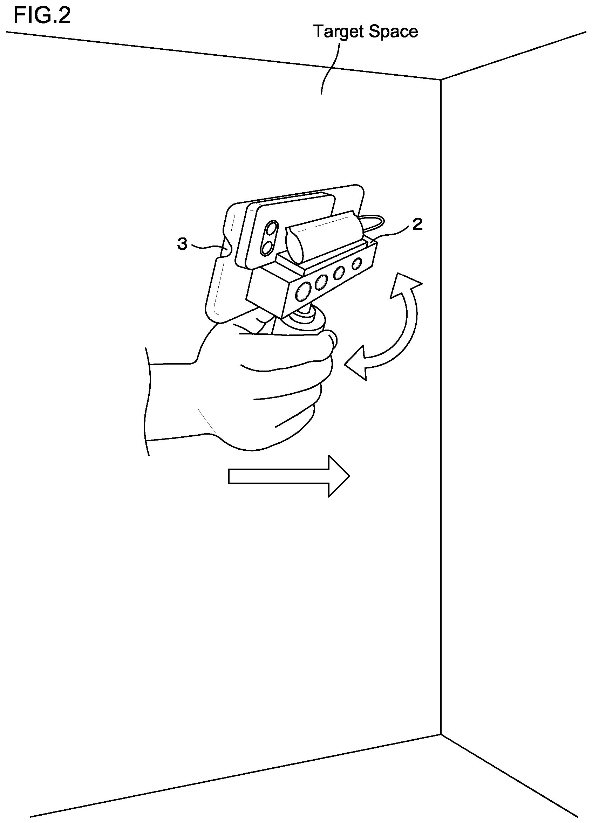

Fig. 1 is a block diagram illustrating a configuration example of an information processing system according to the present embodiment, and Fig. 2 is a perspective view illustrating a configuration example and a usage example of a measuring device 2 according to the present embodiment. The information processing system according to the present embodiment includes the information processing apparatus 1, the measuring device 2, and a terminal device 3. The information processing system is one used to perform imaging and distance measurement in a space having a surface at least partially to semi-automatically create a three-dimensional space model for predicting an environment in the space based on data acquired through the measurement. A space that is subject to modelling will be hereinafter referred to as a target space.

The target space includes one object or a plurality of objects that may affect an environment in the target space. Example objects include at least one of an object affecting an airflow in a target space, an object affecting a thermal environment in the target space, an object affecting air quality in the target space, and an object controlling an environment in the target space. Specifically, example objects include at least one of a fixture, a fitting, a person, an industrial machine, a plant, an air conditioner, and a ventilation device. Example fixtures include at least one of a computer, a monitor, a lighting fixture, a heater, and a chair. Example fittings include at least one of a window, a blind, a partition, and a door. Example air conditioners include an air purifier.

The target space includes a duct system for ventilation. The duct system includes a suction port or a blow-out port of an air conditioner or a ventilation device. The target space includes a piping system for an air conditioner.

On the other hand, example objects include a confidential target object having confidentiality and a non-confidential target object having no confidentiality. Example confidential target objects include at least one of a display device, a person, an industrial machine, a document, a destination display board, a notice, a whiteboard, a blackboard, a tag, and a mail item.

The measuring device 2 is a device that includes a red, green, and blue (RGB) sensor 21, a depth sensor 22, an infrared (IR) projector 23, an infrared camera 24, a gripper, and a terminal holder, and measures a physical quantity related to a shape inside the target space. The gripper is a member gripped by a user of the measuring device 2. The gripper is, for example, a rod-shaped member. The terminal holder is a member used to hold the terminal device 3.

The RGB sensor 21 is, for example, a camera that includes an imaging element such as a complementary metal-oxide semiconductor (CMOS) sensor or a charge-coupled device (CCD) sensor, and captures a color image of the target space. The RGB sensor 21 is able to capture a video. The RGB sensor 21 outputs time-series image data (RGB data) acquired through imaging of the target space. It is assumed that time-series image data forming a video includes time data indicating date and time of imaging.

The depth sensor 22 measures distances (depths) from the measuring device 2 to wall surfaces in the target space and various objects included in the target space. The depth sensor 22 outputs depth data representing a depth acquired through distance measurement. The IR projector 23 is an element for projecting infrared rays onto the target space and an object to acquire more accurate depth data.

The infrared camera 24 is a camera that includes an infrared imaging element, and captures an image of the target space with infrared rays. The infrared camera 24 outputs thermography image data acquired through imaging of the target space.

The measuring device 2 configured as described above outputs image data, depth data, and thermography image data to the terminal device 3. The measuring device 2 may be configured to output image data, depth data, and thermography image data to an external portable storage device for storage. The measuring device 2 may be configured to transmit image data, depth data, and thermography image data directly to the information processing apparatus 1. Image data and depth data will be hereinafter referred to as target space data.

The terminal device 3 is, for example, a portable information processing terminal such as a smartphone, a mobile phone, a tablet terminal, or a personal digital assistant (PDA). The terminal device 3 includes an input interface to which image data, depth data, a thermography image, and orientation data are to be inputted. Furthermore, the terminal device 3 includes an orientation sensor 31.

The orientation sensor 31 is, for example, an azimuth meter such as an electronic compass, and outputs orientation data indicating an orientation of the measuring device 2.

Note that contents of the orientation data are not limited as long as there is information allowing an orientation in the target space to be identified. For example, the orientation data may be information based on a latitude and a longitude of and a time in the target space and a position of a celestial body. The celestial body is an object existing in a universe whose position in a celestial sphere is known and for which it is possible to capture an image. The celestial body is, for example, sun, moon, or an artificial satellite. When a celestial body whose position on the celestial sphere is known is included in a captured image, and a latitude and a longitude of a captured target space and a capturing time are known, it is possible to identify an orientation in the target space.

The orientation data may be information based on a latitude and a longitude of and a time in the target space and a direction of a shadow in a room and a length of the shadow. Since a position of the sun is identified from a direction of a shadow and a length of the shadow, it is possible to identify an orientation in the target space as described above.

A processing unit 11 in the information processing apparatus 1 is able to identify an orientation in the target space based on these pieces of information.

The terminal device 3 causes a display device to display an image that the measuring device 2 has captured based on image data inputted via the input interface. The terminal device 3 stores the inputted image data, the inputted depth data, and the inputted thermography image and the orientation data that the orientation sensor 31 has acquired, and transmits each piece of the data to the information processing apparatus 1 at an appropriate timing. The terminal device 3 may be configured to cause a portable storage device to store the inputted image data, the inputted depth data, and the inputted thermography image and the orientation data that the orientation sensor 31 has acquired.

With the measuring device 2 configured as described above, the user is able to grip the measuring device 2, to move in the target space, and to direct the measuring device 2 in various directions to perform imaging and distance measurement for wall surfaces, a floor surface, and a ceiling surface of and an object in the target space from a plurality of positions and in a plurality of directions. The measuring device 2 provides, to the information processing apparatus 1, target space data, thermography image data, and orientation data that are acquired as measurement is performed in the target space from a plurality of positions.

### <Information Processing Apparatus 1>

The information processing apparatus 1 includes the processing unit 11, a storage unit 12, an acquisition unit 13, a display unit 14, and an operation unit 15.

The processing unit 11 is, for example, a processor including an arithmetic circuit such as a central processing unit (CPU), a micro-processing unit (MPU), an application specific integrated circuit (ASIC), or a field-programmable gate array (FPGA), an internal storage device including a read only memory (ROM) and a random access memory (RAM), and an input-and-output (I/O) terminal. The processing unit 11 may include one arithmetic circuit or a plurality of arithmetic circuits such as a graphics processing unit (GPU), a tensor processing unit (TPU), or an artificial intelligence (AI) chip (semiconductor for AI) specialized for image processing related to object detection and image recognition. The processing unit 11 reads and executes a computer program (program product) P stored in the storage unit 12 to create a three-dimensional space model of the target space. Each of the functional units related to the creation of a three-dimensional space model may be achieved in a software manner or may be partially or wholly achieved in a hardware manner.

The storage unit 12 is, for example, a storage including a hard disk, an electrically erasable programmable ROM (EEPROM), and a flash memory. The storage unit 12 stores various programs that the processing unit 11 executes and various data necessary for processing that the processing unit 11 performs. In the present embodiment, the storage unit 12 stores at least the computer program P that the processing unit 11 executes, a learning model 16, an air control port discrimination model 17, and an object database (DB) 18. Details of the learning model 16, the air control port discrimination model 17, and the object DB 18 will be described later.

The computer program P may be written in the storage unit 12 at a manufacturing stage of the information processing apparatus 1 in an aspect, or, for example, may be distributed from another information processing apparatus 1 via a network in another aspect. The information processing apparatus 1 acquires, through communication, and writes, in the storage unit 12, the computer program P. The computer program P may be readably recorded in a recording medium 10 such as a semiconductor memory including a flash memory, an optical disk, a magneto-optical disk, or a magnetic disk in an aspect. The information processing apparatus 1 reads and stores the computer program P in the storage unit 12.

The acquisition unit 13 is a communication circuit that transmits and receives data to and from an external device in a wired or wireless manner, or a reading circuit that reads data from a portable storage device. The information processing apparatus 1 acquires, for example, image data, depth data, thermography image data, and orientation data from the measuring device 2 via the acquisition unit 13.

The information processing apparatus 1 acquires duct system diagram data representing the duct system related to the suction port or the blow-out port of the ventilation device in the target space from the external device via the acquisition unit 13. The duct system diagram data includes direction information representing a direction of the duct system and outer shape information indicating an outer shape of the duct system. The outer shape information includes information indicating a position of the suction port or the blow-out port of the air conditioner or the ventilation device.

The information processing apparatus 1 acquires piping system diagram data representing a piping system diagram in the target space from the external device via the acquisition unit 13. The piping system diagram data includes direction information representing a direction of the piping system and outer shape information indicating an outer shape of the piping system. The piping system diagram data includes information related to a position of an indoor unit and thermal boundary conditions for the air conditioner.

The information processing apparatus 1 acquires outside air temperature time-series data of the target space and solar radiation amount time-series data in the target space from the external device via the acquisition unit 13.

The display unit 14 is, for example, a display device such as a liquid crystal display panel or an organic electro-luminescence (EL) display panel. The processing unit 11 causes the display unit 14 to display an image related to a three-dimensional space model.

The operation unit 15 is, for example, an input device including a mouse and a keyboard or a touch panel that receives an operation of the user of the information processing apparatus 1. The processing unit 11 accepts, for example, editing of a three-dimensional space model by the user via the operation unit 15.

Note that the information processing apparatus 1 may be a server apparatus coupled to a network. The information processing apparatus 1 may be configured to include a terminal computer and a server apparatus. The information processing apparatus 1 may be configured to include a plurality of computers to perform processing in a distributed manner, may be achieved based on a plurality of virtual machines provided in one server, or may be achieved using a cloud server. Furthermore, the information processing apparatus 1 may be the terminal device 3. That is, the terminal device 3 may be configured to function as the information processing apparatus 1.

### <Learning Model 16>

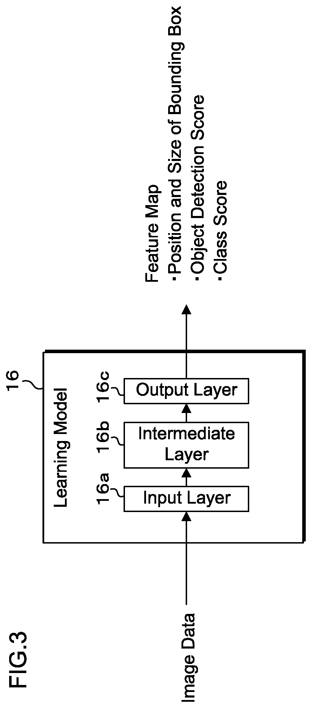

Fig. 3 is a conceptual diagram of the learning model 16 according to the present embodiment. The learning model 16 includes, for example, a convolutional neural network (CNN) that has undergone learning through deep learning. The learning model 16 includes an input layer 16a into which image data captured using the measuring device 2 is inputted, an intermediate layer 16b from which a feature amount of the image data is extracted, and an output layer 16c from which a result of inference regarding a detected object is outputted. The learning model 16 is, for example, a you only live once (YOLO) model.

In each of the layers of the learning model 16, there are a plurality of nodes. The nodes in each of the layers are coupled to each other via edges. In each of the layers, there is an activation function (response function), and, at each of the edges, there is a weight. A value outputted from each of the nodes in each of the layers is calculated from a value at each of the nodes in the previous layer, the weight at each of the edges, and the activation function of the layer. It is possible to change the weight at each of the edges by performing learning.

That is, the input layer 16a in the learning model 16 includes the plurality of nodes that accept image data, that is, input of pixel values at pixels forming an image of the target space and a surface of an object, and transfers the inputted pixel values to the intermediate layer 16b.

The intermediate layer 16b includes a plurality of sets of a convolution layer (CONV layer) and a pooling layer, and a fully connected layer. In each of the convolution layers, filter processing is executed on the values outputted from the nodes in the previous layer to extract a feature map. In each of the pooling layers, the feature map outputted from the convolution layers is reduced to acquire a new feature map.

The output layer 16c includes a node that outputs a final result of inference related to an object detected from the image data. The result of inference includes, for example, a central coordinate position and vertical and horizontal sizes of a bounding box surrounding the object, an object detection score indicating a probability that an image surrounded by the bounding box is an image of the object, and a class score indicating a probability that the object belongs to a certain class.

Note that, although the output acquired from the output layer 16c includes a plurality of bounding boxes overlapping with each other, performing post-processing of removing the bounding boxes overlapping with each other such as non-maximum suppression (NMS) processing, for example, makes it possible to acquire a position and a size of a bounding box that surrounds at a highest probability one object or each of a plurality of objects included in the image of the target space, an object detection score, and a class score.

A method of generating the learning model 16 will now be described herein. Training data including a plurality of pieces of image data of the target space including an object and an annotation file of each of the pieces of image data is first prepared. An annotation file serves as teacher data indicating a correct value provided to a corresponding image. Specifically, an annotation file is data indicating a central coordinate position, vertical and horizontal sizes, and a class of a bounding box surrounding an image of an object included in a corresponding image. A class indicates a group classified in accordance with an attribute of an object.

When an image serving as training data is inputted to the CNN, and an error back propagation method or an error gradient descent method, for example, is used to optimize a weighting factor for the neural network to reduce an error (a value of a predetermined loss function or error function) between data outputted from the CNN and data that teacher data indicates, it is possible to generate the learning model 16.

Note that, although YOLO has been described as an example of the learning model 16, the learning model 16 may be configured using, for example, region-based CNN (R-CNN), Fast R-CNN, Faster R-CNN, other CNNs, or a vision transformer. Furthermore, the learning model 16 using an algorithm such as a decision tree, a random forest, or a support vector machine (SVM) may be used. In addition, a plurality of the algorithms described above may be combined to form the learning model 16.

The air control port discrimination model 17 is an image recognition learning model that discriminates, based on image data of the air control port of the air conditioner or the ventilation device, whether the air control port is the suction port or the blow-out port. The air control port discrimination model 17 includes, for example, a convolutional neural network (CNN) that has undergone learning through deep learning. A configuration of the neural network itself is similar or identical to the configuration of the learning model 16. The air control port discrimination model 17 includes an input layer into which air control port image data that is data of an image portion (hereinafter referred to as an air control port image) of the air control port of the air conditioner or the ventilation device is inputted, an intermediate layer from which a feature amount of the air control port image data is extracted, and an output layer from which probability data indicating a probability that the air control port image corresponds to the suction port or the blow-out port is outputted.

A method of generating the air control port discrimination model 17 will now be described herein. Training data including a plurality of pieces of air control port image data and teacher data indicating whether each of air control port images corresponds to the suction port or the blow-out port is first prepared. Then, when an air control port image serving as training data is inputted to the CNN, and the error back propagation method or the error gradient descent method, for example, is used to optimize the weighting factor for the neural network to reduce an error (a value of the predetermined loss function or error function) between data outputted from the CNN and data that the teacher data indicates, the processing unit 11 is able to generate the air control port discrimination model 17.

Note that, as long as it is possible to acquire sufficient discrimination accuracy, such a configuration may be applied that the learning model 16 be used to discriminate the suction port and the blow-out port.

### <Object DB 18>

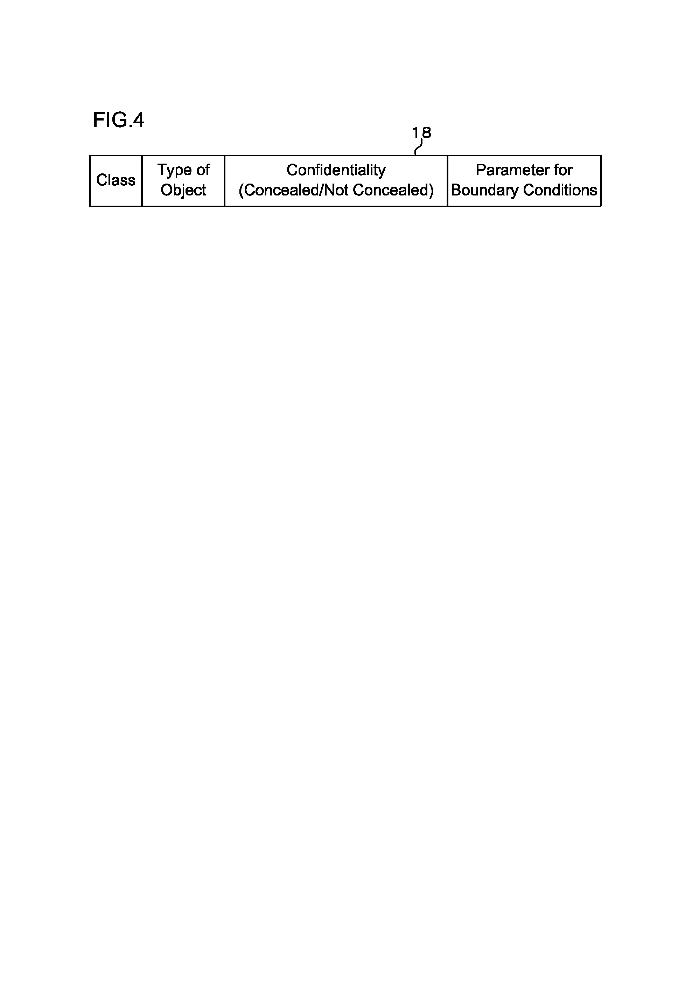

Fig. 4 is a conceptual diagram of the object DB 18 according to the present embodiment. The object DB 18 stores, for example, a class of an object, a type of the object, confidentiality, a type of a boundary condition, and a parameter for the boundary condition in association with each other. Example types of objects include, for example, a fixture, a fitting, a person, an industrial machine, a plant, an air conditioner, and a ventilation device, as described above. The confidentiality is data indicating whether an object is a confidential target object or a non-confidential target object. Example parameters for boundary conditions include, for example, data indicating a Dirichlet boundary condition and a Neumann boundary condition for a temperature, pressure, and a flow velocity on the surface of an object. Example parameters include, for example, sensible heat, latent heat, an air quantity, a direction of wind, and a wind speed.

A parameter for an environmental condition is an example of influence definition data that defines an influence of a confidential target object on an environment in the target space.

### <Information Processing Method>

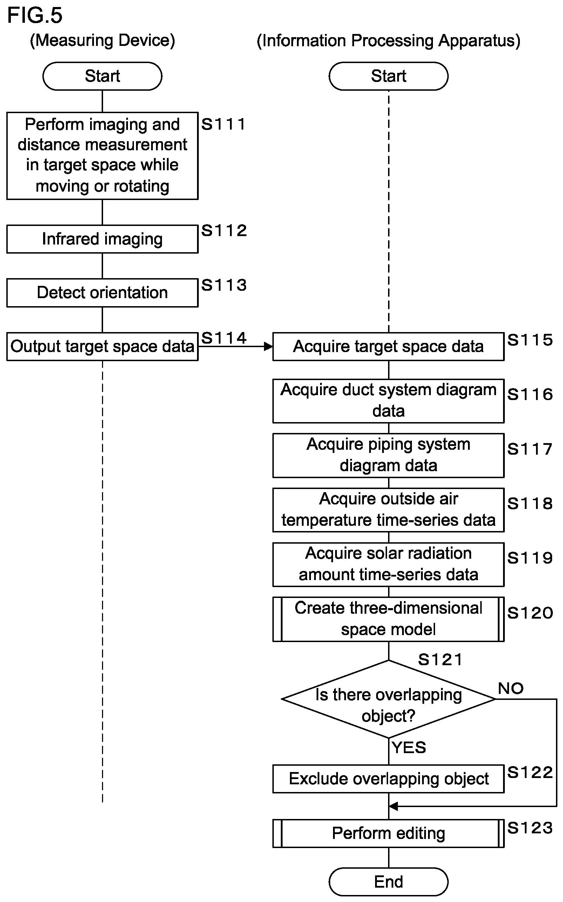

Fig. 5 is a flowchart illustrating a processing procedure in the information processing apparatus 1 system according to the present embodiment. The user moves or rotates the measuring device 2 in the target space to perform imaging and distance measurement in the target space (step S111). The infrared camera 24 captures an image of the target space with infrared rays (step S112). The orientation sensor 31 detects an orientation of the measuring device 2 (step S113).

The terminal device 3 transmits target space data, thermography image data, and orientation data to the information processing apparatus 1 (step S114).

The processing unit 11 in the information processing apparatus 1 acquires the target space data, the thermography image data, and the orientation data outputted from the terminal device 3 (step S115).

When the orientation data does not directly represent an orientation in the target space, the processing unit 11 may perform arithmetic processing to convert the orientation data into data directly indicating the orientation.

For example, the processing unit 11 calculates data indicating an orientation based on a latitude and a longitude of and a time in the target space and a position of the celestial body.

For example, the processing unit 11 calculates data indicating an orientation based on a latitude and a longitude of and a time in the target space and a direction of a shadow in a room and a length of the shadow.

Note that the processing unit 11 may calculate data indicating an orientation in a three-dimensional space based on image data and time data.

The processing unit 11 acquires duct system diagram data from the external device (step S116), and acquires piping system diagram data (step S117). The processing unit 11 acquires outside air temperature time-series data from the external device (step S118). The processing unit 11 acquires solar radiation amount time-series data from the external device (step S119).

For example, a sensor provided around the target space detects an outside air temperature time and a solar radiation amount, and transmits outside air temperature time-series data and solar radiation amount time-series data to the information processing apparatus 1. The processing unit 11 acquires the outside air temperature time-series data and the solar radiation amount time-series data from the sensor.

Note that the processing unit 11 may be configured to acquire, for example, outside air temperature time-series data and solar radiation amount time-series data from an external server that distributes weather information including the pieces of data.

The processing unit 11 creates a three-dimensional space model in which an influence of an object on the target space is reflected based on the acquired various pieces of data including the acquired target space data (step S120).

### <Creation of Three-dimensional Space Model>

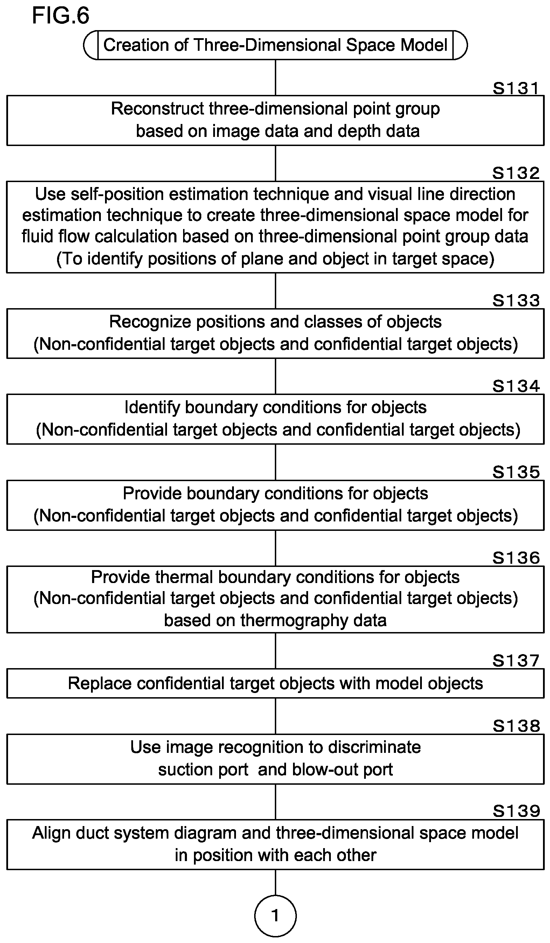

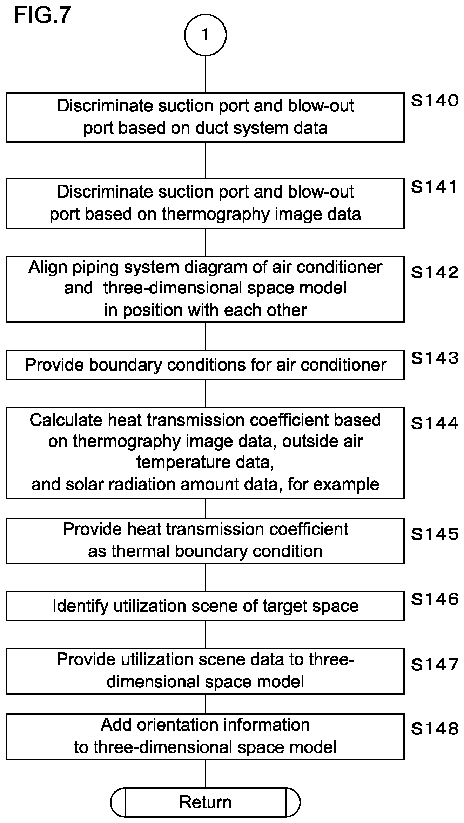

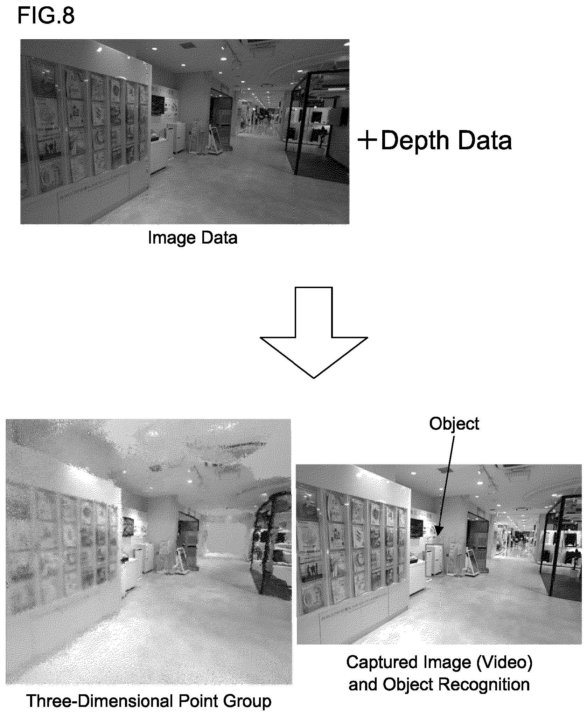

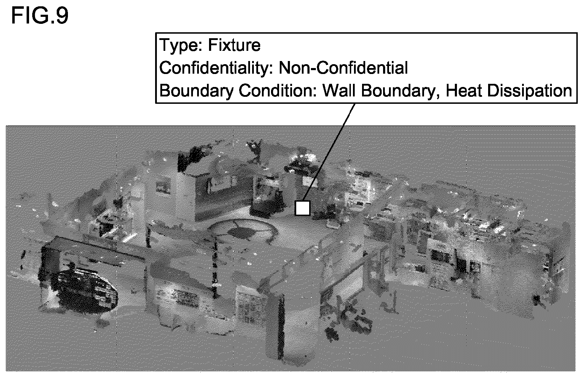

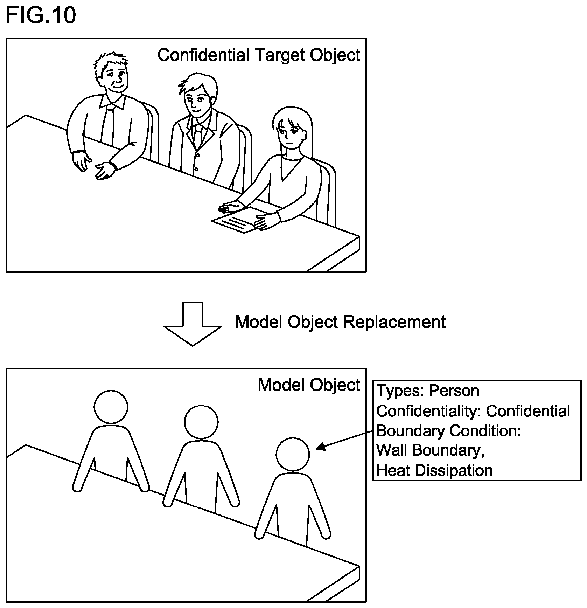

Figs. 6 and 7 are flowcharts illustrating a creation processing procedure for a three-dimensional space model, Fig. 8 is an explanatory diagram illustrating an example of a three-dimensional point group and a captured image, Fig. 9 is an explanatory diagram illustrating an example of a three-dimensional space model, and Fig. 10 is a conceptual diagram illustrating confidentializing processing for a confidential target object.

An outline of the processing is as follows. To create a three-dimensional space model for fluid flow analysis, image data and depth data are analyzed and a three-dimensional point group data of the target space is created, and a type and a position, in the three-dimensional point group data, of an element such as a heat source that needs to be taken into consideration when the fluid flow analysis is to be performed are identified from a captured image using the learning model 16 having undergone learning in advance and are reflected in the three-dimensional space model.

As illustrated in Fig. 8, the processing unit 11 in the information processing apparatus 1 reconstructs a three-dimensional point group in the target space based on the image data and the depth data (step S131). In Fig. 8, an upper drawing illustrates the image data and the depth data, and a lower left drawing illustrates the three-dimensional point group data. A lower right diagram illustrates the image data corresponding to the three-dimensional point group data.

As illustrated in Fig. 9, the processing unit 11 uses the self-position estimation technique and the visual line direction estimation technique to create a three-dimensional space model for fluid flow calculation based on the three-dimensional point group data (step S132). The processing unit 11 is able to use the self-position estimation technique and the visual line direction estimation technique to identify planes corresponding to wall surfaces, a floor surface, and a ceiling surface in the target space, planes corresponding to outer surfaces of objects such as various devices and fixtures, and positions of the planes to create a three-dimensional space model formed by the plurality of planes.

As illustrated in the lower right diagram in Fig. 8, the processing unit 11 inputs the image data into the learning model 16 to detect objects (non-confidential target objects and confidential target objects) to recognize positions and classes of the objects (step S133). Furthermore, the processing unit 11 recognizes dimensions of the objects. The processing unit 11 uses the classes as keys, refers to the object DB 18, and recognizes whether or not each of the detected objects corresponds to a confidential target object. When the image data of one of the objects includes character-related information such as characters and symbols related to thermal boundary conditions, the processing unit 11 may be configured to read the character-related information to acquire information related to an attribute of the object and thermal boundary conditions.

The processing unit 11 identifies boundary conditions for the non-confidential target objects and the confidential target objects based on a result of recognition of the objects (step S134). Specifically, the processing unit 11 reads parameters for the boundary conditions, which correspond to classes of the non-confidential target objects and the confidential target objects to identify values of the boundary conditions.

The processing unit 11 provides the boundary conditions for the non-confidential target objects and the confidential target objects to the three-dimensional space model (step S135). Positions at which the boundary conditions are set in the three-dimensional space are identified based on the positions and the dimensions of the objects recognized in step S132 and the three-dimensional point group.

Note that, when an object of a chair is recognized in the target space, the processing unit 11 may provide thermal boundary conditions for a person to the object of the chair. The storage unit 12 in the information processing apparatus 1 has stored typical predetermined thermal boundary conditions for objects of persons such as sensible heat and latent heat, and the processing unit 11 may provide the thermal boundary conditions to the object of the chair.

The processing unit 11 identifies temperatures, amounts of heat, or temperature characteristics of the non-confidential target objects and the confidential target objects based on the thermography image data to provide heating conditions for the objects (step S136).

Using an amount of heat of an object such as a fixture makes it possible to analyze an environment in the target space in more detail. Therefore, a thermography is used to perform measurement to calculate and reflect, in a model for fluid flow calculation, a temperature or an amount of heat of an object.

The confidential target objects included in the three-dimensional space model are replaced with model objects including no confidential information (step S137). For a shape of a model object, it may be an object having a substantially rectangular parallelepiped shape surrounding a confidential target object or may be an object having a shape corresponding to the confidential target object. For example, the storage unit 12 may be configured to store a model object in association with a class of a confidential target object. The processing unit 11 reads a model object corresponding to a class of a confidential target object to replace the confidential target object with the read model object.

The method of replacing a confidential target object with a model object is an example of a method of confidentializing a confidential target object. Such a configuration may be applied that a confidential target object be processed with a desired method as long as it is possible to confidentialize the confidential target object.

There are no limitation in computer and timing for confidentializing a confidential target object. When the information processing apparatus 1 includes a terminal computer and a server apparatus, execution may be performed in the terminal computer or execution may be performed in the server apparatus. Such a configuration may be applied that the terminal device 3 be configured to execute processing of confidentializing a confidential target object.

Other methods of setting boundary conditions will now be described herein.

The processing unit 11 inputs the image data of the air control port of the air conditioner or the ventilation device into the air control port discrimination model 17 to discriminate whether the air control port is the suction port or the blow-out port (step S138).

Although, in step S138, an example in which a machine learning model is used to discriminate the suction port and the blow-out port has been described, such a configuration may be applied that feature amounts related to a suction port and a blow-out port be calculated based on image data of an air control port to discriminate whether the air control port be the suction port or the blow-out port based on the calculated feature amounts.

When the processing unit 11 is able to discriminate the suction port and the blow-out port at a sufficient probability with the image recognition processing using the learning model 16 in step S133, steps S138 to S141 in the processing may be omitted.

The processing unit 11 aligns the target space represented by the target space data and the duct system represented by the duct system data in position with each other based on the acquired orientation data related to the orientation in the target space, the acquired information representing the outer shape in the target space based on the target space data, and the acquired duct system diagram data (step S139). Note that such a configuration may be applied that a target space and a duct system be aligned in position with each other by referring to a position of one whose accurate position is objectively known and unchanged, such as an elevator, a staircase, or a pillar.

The processing unit 11 discriminates whether the air control port is the suction port or the blow-out port based on the acquired duct system diagram data (step S140). In step S140, a duct-type suction port and a duct-type blow-out port, which are pieces of information that are difficult to determine through image recognition, are determined using a duct system diagram.

Although it is necessary to correctly discriminate a duct-type suction port and a duct-type blow-out port of an air conditioner or a ventilation device, since a result of fluid flow calculation greatly differs depending on whether it is a suction port or a blow-out port, it is difficult to discriminate a suction port and a blow-out port through only image recognition, since there is no great difference in appearance. Therefore, information of the suction port and the blow-out port is acquired from the duct system diagram in the target space and is reflected in the three-dimensional space model.

With step S140, using a duct system diagram when a three-dimensional space model is to be created makes it possible to recognize the duct system of the air conditioner or the ventilation device to support setting of thermal boundary conditions for the suction port and the blow-out port.

The processing unit 11 discriminates whether the air control port is the suction port or the blow-out port based on the thermography image data including the air control port (step S141). In step S141, a thermography image is used to measure temperatures at the suction port and the blow-out port of the air conditioner or the ventilation device and a temperature at the ceiling surface to discriminate the suction port and the blow-out port to reflect the thermal boundary conditions for the suction port and the blow-out port in the three-dimensional space model.

The processing unit 11 acquires orientation data related to an orientation in the target space to align, based on the acquired orientation data, the information representing the outer shape in the target space based on the target space data, and the piping system diagram data, the target space represented by the target space data and the piping system represented by the piping system diagram data in position with each other (step S142).

The acquired thermal boundary conditions for the air conditioner based on the piping system diagram data are provided to the three-dimensional space model (step S143). Since the piping system of the air conditioner and the target space have been aligned in position with each other, the processing unit 11 is able to identify a relationship between the object of the air conditioner included in the target space and the piping system. The processing unit 11 is able to identify information related to the thermal boundary conditions for the piping system corresponding to the object of the air conditioner, and is able to provide the thermal boundary conditions for the object to the three-dimensional space model.

In steps S142 and S143, the system information of the air conditioner becomes important when airflow analysis is to be performed. However, it is impossible to acquire sufficient information of the air conditioner through only image recognition of an object. Therefore, using the piping system diagram data makes it possible to reflect the system information of the indoor unit in the three-dimensional space model. Note that the piping system diagram may be displayed in a superimposed manner on the three-dimensional space model.

The processing unit 11 calculates a heat transmission coefficient of a fitting based on the thermography image data, the outside air temperature time-series data of the target space, the solar radiation amount time-series data, and thickness data of the fitting (step S144). The processing unit 11 provides the calculated heat transmission coefficient as a thermal boundary condition for the fitting (step S145). A thickness of the fitting is acquired through the image recognition processing in step S133. The processing unit 11 may be configured to combine a result of the image recognition processing in step S133 and data of the three-dimensional point group to calculate the thicknesses of the fitting.

Using the heat transmission coefficient of a fitting such as a wall or a window makes it possible to analyze an environment in the target space in more detail. Therefore, in steps S144 and S145, a thermography is used to perform measurement to calculate and reflect, in the three-dimensional space model, the heat transmission coefficient of the fitting.

With steps S144 and S145, using a thermography image, outside air temperature time-series data, and insolation amount time-series data makes it possible to calculate a heat transmission coefficient of a fitting such as a wall or a window to support input of a thermal boundary condition.

The processing unit 11 identifies a utilization scene of the target space based on the image data (step S146), and provides utilization scene data indicating the identified utilization scene of the target space to the three-dimensional space data (step S147). For example, an attribute is provided to the three-dimensional space data in accordance with a scene such as those in a hospital, a school, a factory, or an office.

The processing unit 11 may identify an underfloor outlet included in the target space based on image data, and provide data indicating a position of the underfloor outlet to the three-dimensional space data.

The processing unit 11 adds the acquired orientation data or information based on the orientation data to the three-dimensional space model (step S148), and ends the creation processing for a three-dimensional space model. For example, data indicating an orientation of the three-dimensional space model is added to the three-dimensional space model.

Now back to Fig. 5, the processing unit 11 discriminates whether or not the target space data includes an object in an overlapping manner (step S121). For example, when similarity of shapes and attributes of a plurality of objects is equal to or greater than a predetermined value and distances to the plurality of objects are each less than a predetermined distance, the processing unit 11 determines that the plurality of objects are overlapping objects.

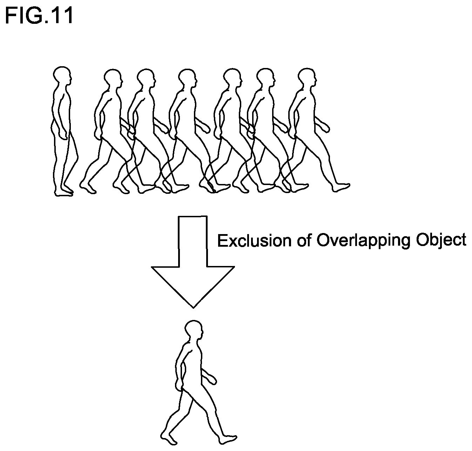

Fig. 11 is a conceptual diagram illustrating exclusion processing for an overlapping object. When there is an overlapping object (step S121: YES), the processing unit 11 excludes the overlapping object as illustrated in Fig. 11 (step S122).

When step S122 in the processing ends, and when it is determined that there is no overlapping object (step S121: NO), the processing unit 11 executes editing processing for the three-dimensional space model (step S123).

Allowing desired editing to be possible in addition to automatic creation of a three-dimensional space model and allowing editing of a model for fluid flow calculation to be accepted while three-dimensional point group data is displayed in a superimposed manner make it possible to create an accurate model for fluid flow calculation. Since there may be a case where a special surface that transmits or reflects infrared rays, such as glass or a mirror, be incorrectly recognized as a surface, manual correction and creation of a target surface in a three-dimensional space model are performed in such a case, and, when a type or a position of an identified element is different from a type or a position of an actual one, manual correction and creation are also performed. At this time, accepting correction and creation while the three-dimensional point group data is displayed in a superimposed manner makes it possible to create a more accurate model for fluid flow calculation.

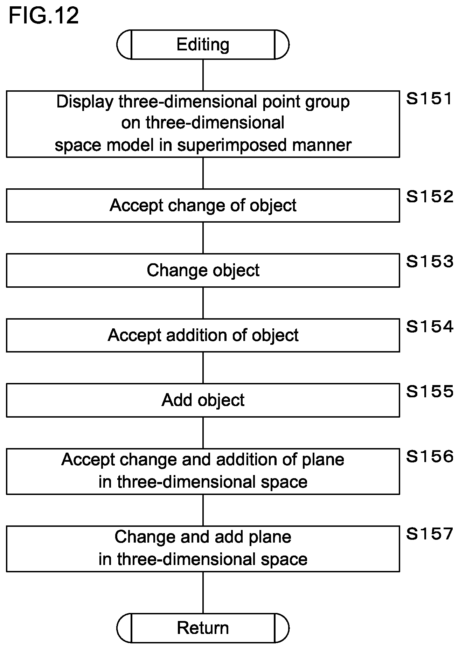

Fig. 12 is a flowchart illustrating an editing processing procedure for an object. The processing unit 11 causes the display unit 14 to display the three-dimensional point group on the created three-dimensional space model in a superimposed manner (step S151). The processing unit 11 accepts a change in the object via the operation unit 15 (step S152), and applies the change in the object in accordance with the accepted operation (step S153). For example, the processing unit 11 accepts and changes a shape and a class of the object and a parameter for a boundary condition.

When persons have moved or gathered in the target space, there are changes in the three-dimensional space model. The processing unit 11 accepts an increase or a decrease of objects of persons and changes in positions in the target space, and changes a number and the positions of the objects of the persons.

The processing unit 11 may be configured to acquire data related to a seat layout drawing in the target space and provide thermal boundary conditions for persons to objects of seats based on the acquired data and information representing an outer shape in the target space based on the target space data. The seat layout drawing is data indicating positions of objects of seats in the target space. The processing unit 11 provides the thermal boundary conditions for the objects of the persons to the objects of the seats based on the target space represented by the target space data and the positions of the objects of the seats represented by the data related to the seat layout drawing. The storage unit 12 in the information processing apparatus 1 has stored typical predetermined thermal boundary conditions for objects of persons, and the processing unit 11 may provide the thermal boundary conditions to an object of a seat.

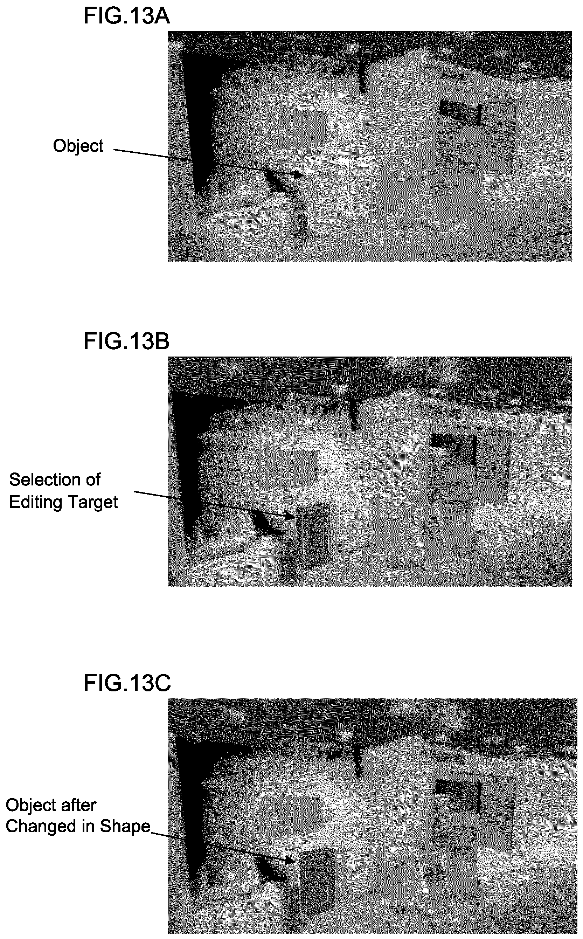

Figs. 13A, 13B, and 13C are conceptual diagrams illustrating a changing method for an object. Fig. 13A illustrates a three-dimensional space model of a target space including a recognized object. Fig. 13B illustrates a state in which an object serving as an editing target is selected, and Fig. 13C illustrates a state in which a shape of the object is changed.

The processing unit 11 accepts addition of an object via the operation unit 15 (step S154), and adds the object in accordance with the accepted operation (step S155).

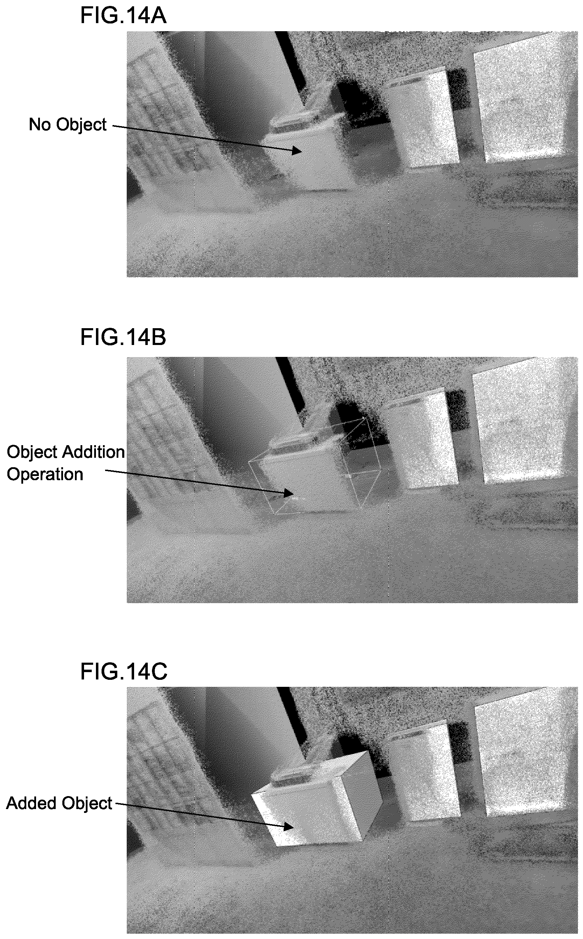

Figs. 14A, 14B, and 14C are conceptual diagrams illustrating an adding method for an object. Fig. 14A illustrates a three-dimensional space model of a target space in which an object that actually exists is not recognized. Fig. 14B illustrates a state in which an addition operation for an object is performed, and Fig. 14C illustrates a state in which the object has been added.

The processing unit 11 accepts change and addition of a plane in the three-dimensional space via the operation unit 15 (step S156), and changes or adds the plane in the three-dimensional space in accordance with the accepted operation (step S157). The plane is, for example, a portion corresponding to a wall surface in the target space. The user is able to operate the operation unit 15 to change a position and a dimension of the wall surface. The user is able to also operate the operation unit 15 to add a wall surface that has not yet been reflected in the three-dimensional space model.

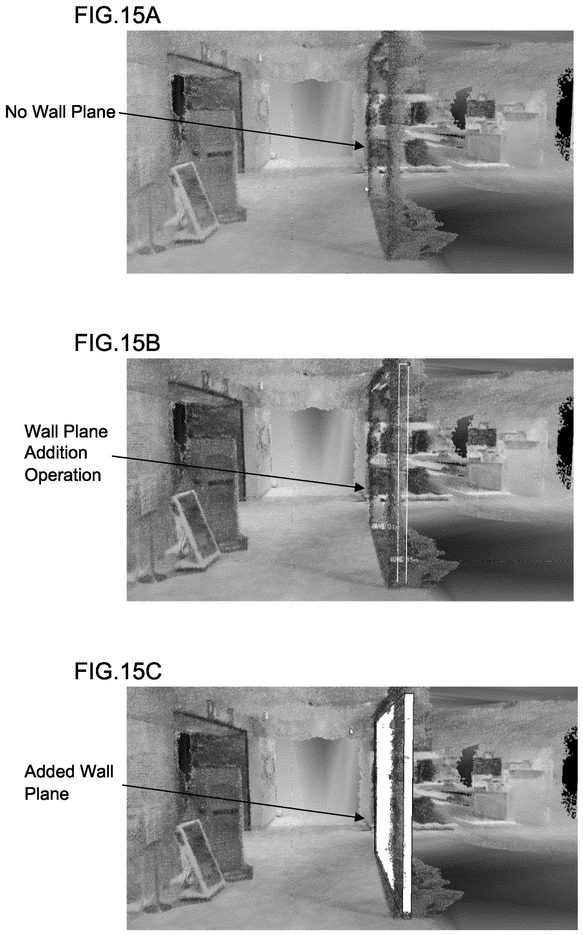

Figs. 15A, 15B, and 15C are conceptual diagrams illustrating an editing method for a plane forming a target space. Fig. 15A illustrates a three-dimensional space model of a target space in which a wall plane that actually exists is not recognized. Fig. 15B illustrates a state in which an addition operation for a wall plane is performed, and Fig. 15C illustrates a state in which the wall plane has been added.

Note that the processing unit 11 may identify, at a desired timing in each of the steps in the processing described above, and with steps similar to steps S132 and S133 in the processing, an attribute of an object, such as a dimension, a shape, sensible heat, latent heat, an air quantity, a direction of wind, a wind speed, and a parameter for a boundary condition, to create an augmented reality image in which the identified attribute of the object is reflected in the image data. For example, the processing unit 11 adds, to the image data acquired through imaging of the target space with the measuring device 2, data for causing an image representing the attribute of the object included in the image to be displayed in a superimposed manner. A desired display device that reproduces image data of a target space is able to reproduce an augmented reality image to allow the augmented reality image to reappear.

### <Working and Effects>

With the information processing apparatus 1 according to the present embodiment, for example, it is possible to create a three-dimensional space model in which an influence of an object included in a target space on an environment in the target space is reflected based on target space data acquired through measurement in the target space from a plurality of positions.

It is possible to reduce man-hours for creating a three-dimensional space model that is a model for fluid flow calculation (an interior model or a model of an element such as a fixture or a heat source). A work of measuring a size of a shape inside a room and of measuring a size of a fixture is eliminated, eliminating an error in measuring a size.

Using duct system diagram data makes it possible to create a three-dimensional space model provided with boundary conditions in which a difference between a suction port and a blow-out port is taken into consideration.

Using a thermography image makes it possible to create a three-dimensional space model provided with boundary conditions in which a difference between a suction port and a blow-out port is taken into consideration.

With the image recognition processing, it is possible to create a three-dimensional space model provided with boundary conditions in which a difference between a suction port and a blow-out port is taken into consideration.

Using piping system diagram data makes it possible to create a three-dimensional space model provided with system information of an indoor unit.

Based on a thermography image, for example, it is possible to create a three-dimensional space model provided with a heat transmission coefficient of a fitting such as a wall or a window.

With an operation of the user, it is possible to edit and change a target space and an object included in a three-dimensional space model.

With an operation of the user, it is possible to add a wall plane in a target space and an object to a three-dimensional space model.

It is possible to create a three-dimensional space model including orientation information.

It is possible to create a three-dimensional space model including data indicating a utilization scene of the target space.

It is possible to create a three-dimensional space model in which an overlapping object is excluded.

It is possible to confidentialize an object having confidentiality, which is included in a target space, and to create a three-dimensional space model in which an influence of the object on an environment in the target space is reflected.

It is possible to create a three-dimensional space model in which a confidential target object is replaced with a model object.

While the embodiment has been described above, it will be understood that various changes in form and detail may be made therein without departing from the spirit and scope of the claims. At least a part of the embodiment described above may be desirably combined.

### Reference Signs List

- 1: INFORMATION PROCESSING APPARATUS
- 2: MEASURING DEVICE
- 3: TERMINAL DEVICE
- 11: PROCESSING UNIT
- 12: STORAGE UNIT
- 13: ACQUISITION UNIT
- 14: DISPLAY UNIT
- 15: OPERATION UNIT
- 16: LEARNING MODEL
- 17: AIR CONTROL PORT DISCRIMINATION MODEL
- 18: OBJECT DB
- 21: RGB SENSOR
- 22: DEPTH SENSOR
- 23: IR PROJECTOR
- 24: INFRARED CAMERA
- 31: ORIENTATION SENSOR
- P: COMPUTER PROGRAM

## Claims

1. An information processing apparatus comprising:
an acquisition unit that acquires target space data acquired as measurement is performed inside a target space from a plurality of positions; and
a processing unit that processes the acquired data,
the processing unit
recognizing, from the acquired target space data, an attribute and a position of an object in the target space, the object affecting an environment in the target space, and
outputting the attribute and the position of the object in the target space in association with the target space data.

2. The information processing apparatus according to claim 1, wherein, based on the target space data acquired by the acquisition unit and the attribute and the position of the object in the target space, an augmented reality image of the target space in which the attribute and the position of the object in the target space, the object affecting the environment in the target space, are reflected is created.

3. The information processing apparatus according to claim 1 or 2, wherein, based on the target space data acquired by the acquisition unit and the attribute and the position of the object in the target space, a three-dimensional space model of the target space in which the attribute and the position of the object in the target space, the object affecting the environment in the target space, are reflected is created.

4. The information processing apparatus according to claim 3, wherein the three-dimensional space model is a model for predicting the environment in the target space.

5. The information processing apparatus according to any one of claims 1 to 4, wherein the object in the target space includes at least one of
an object affecting an airflow in the target space,
an object affecting a thermal environment in the target space,
an object affecting air quality in the target space, and
an object controlling the environment in the target space.

6. The information processing apparatus according to any one of claims 1 to 5, wherein the object in the target space includes at least one of
a fixture, a fitting,
a person, an industrial machine, a plant,
an air conditioner, and a ventilation device.

7. The information processing apparatus according to any one of claims 1 to 6, wherein
the object in the target space includes an air conditioner or a ventilation device, and
the processing unit recognizes an air control port of the air conditioner or the ventilation device, and discriminates whether the air control port is a suction port or a blow-out port.

8. The information processing apparatus according to claim 7, wherein the processing unit
acquires duct system data representing a duct system related to the suction port or the blow-out port in the target space, and
discriminates the suction port or the blow-out port in the target space based on the acquired duct system data.

9. The information processing apparatus according to claim 8, wherein
the duct system data includes orientation information and outer shape information indicating, respectively, an orientation and an outer shape of the duct system, and
the processing unit
acquires orientation information related to an orientation in the target space, and, based on the acquired orientation information, information representing an outer shape in the target space based on the target space data, and the duct system data, aligns the target space represented by the target space data and the duct system represented by the duct system data in position with each other.

10. The information processing apparatus according to any one of claims 7 to 9, wherein the processing unit
acquires thermography data of the target space, and
discriminates the suction port or the blow-out port based on the acquired thermography data.

11. The information processing apparatus according to any one of claims 7 to 10, wherein
the target space data includes image data of the target space, and
the processing unit
calculates a feature amount related to the suction port or the blow-out port based on the acquired image data, and discriminates the suction port or the blow-out port based on the calculated feature amount.

12. The information processing apparatus according to any one of claims 1 to 11, wherein the attribute of the object in the target space includes at least one of a dimension and a shape of the object and sensible heat, latent heat, an air quantity, a direction of wind, and a wind speed in the target space.

13. The information processing apparatus according to any one of claims 1 to 12, wherein the processing unit
creates the three-dimensional space model including thermal boundary conditions in accordance with the attribute of the object in the target space.

14. The information processing apparatus according to any one of claims 1 to 13, wherein the processing unit
acquires piping system data representing a piping system of an air conditioner in the target space, and
creates the three-dimensional space model including thermal boundary conditions for the air conditioner based on the acquired piping system data.

15. The information processing apparatus according to claim 14, wherein
the piping system data includes orientation information and outer shape information indicating, respectively, an orientation and an outer shape of the piping system, and
the processing unit
acquires orientation information related to an orientation in the target space, and aligns, based on the acquired orientation information, information representing an outer shape in the target space based on the target space data, and the piping system data, the target space represented by the target space data and the piping system represented by the piping system data in position with each other.

16. The information processing apparatus according to any one of claims 1 to 15, wherein the processing unit
acquires thermography data of the target space, and creates, based on the acquired thermography data, the three-dimensional space model including a temperature of the object as a thermal boundary condition.

17. The information processing apparatus according to any one of claims 1 to 16, wherein the processing unit
acquires thermography data of the target space, outside air temperature data of the target space, solar radiation amount data, and thickness data of a fitting, and creates the three-dimensional space model including a heat transmission coefficient of the fitting as a thermal boundary condition based on each piece of the acquired data.

18. The information processing apparatus according to any one of claims 1 to 17, wherein the processing unit
accepts editing of the attribute and the position of the object in the target space to change the three-dimensional space model.

19. The information processing apparatus according to any one of claims 1 to 18, wherein the processing unit
accepts addition of an object in the target space to change the three-dimensional space model.

20. The information processing apparatus according to any one of claims 1 to 19, wherein the acquisition unit
acquires the target space data acquired when a measuring device that measures a physical quantity related to a shape inside the target space is moved or rotated.

21. The information processing apparatus according to any one of claims 1 to 20, wherein the processing unit
uses self-position estimation processing or visual line direction estimation processing to identify the target space and the position of the object in the target space.

22. The information processing apparatus according to any one of claims 1 to 21, wherein
the acquisition unit
acquires orientation information related to an orientation in the target space, and
the processing unit
creates the three-dimensional space model including the orientation information acquired by the acquisition unit or information based on the orientation information.

23. The information processing apparatus according to claim 22, wherein the orientation information is
information based on a latitude and a longitude of and a time in the target space and a position of a celestial body or information based on the latitude and the longitude of and the time in the target space and a direction of a shadow in a room and a length of the shadow.

24. The information processing apparatus according to any one of claims 1 to 23, wherein
the target space data includes red, green, and blue (RGB) data and time data, and
the processing unit
identifies an orientation in the target space based on the RGB data and the time data, and
creates the three-dimensional space model including orientation information indicating the identified orientation or information based on the orientation information.

25. The information processing apparatus according to any one of claims 1 to 24, wherein
the target space data includes RGB data and time data, and
the processing unit
identifies a utilization scene of the target space based on the RGB data and the time data.

26. The information processing apparatus according to any one of claims 1 to 25, wherein the processing unit discriminates whether or not the target space data includes the object in the target space in an overlapping manner.

27. The information processing apparatus according to any one of claims 1 to 26, wherein the processing unit
excludes, when the object included in the target space is recognized in an overlapping manner, the overlapping object.

28. The information processing apparatus according to any one of claims 1 to 27, wherein an attribute and a position of a confidential target object in the target space is recognized based on the target space data acquired by the acquisition unit,
based on the target space data acquired by the acquisition unit, the attribute and the position of the object in the target space, and the attribute and the position of the confidential target object in the target space, the three-dimensional space model of the target space, in which the attributes and the positions of the object and the confidential target object with respect to the environment in the target space are reflected, is created, and
the confidential target object is processed.

29. An information processing system comprising:
the information processing apparatus according to any one of claims 1 to 28; and
a measuring device that measures a physical quantity related to a shape inside the target space,
wherein
the information processing apparatus
acquires the target space data from the measuring device.

30. An information processing system comprising:
an acquisition unit that acquires target space data acquired as measurement is performed inside a target space from a plurality of positions; and
a processing unit that processes the acquired data,
the processing unit
recognizing an attribute and a position of an object in the target space, the object affecting an environment in the target space, and
outputting the attribute and the position of the object in the target space in association with the target space data.

31. An information processing method comprising:
acquiring target space data acquired as measurement is performed inside a target space from a plurality of positions;
recognizing an attribute and a position of an object in the target space, the object affecting an environment in the target space; and
outputting the attribute and the position of the object in the target space in association with the target space data.

32. A computer program for causing a computer to execute a process comprising:
acquiring target space data acquired as measurement is performed inside a target space from a plurality of positions;
recognizing an attribute and a position of an object in the target space, the object affecting an environment in the target space; and
outputting the attribute and the position of the object in the target space in association with the target space data.
